**Europäisches Patentamt**

**European Patent Office**

**Office européen des brevets**

(19)

(11) Veröffentlichungsnummer: **0 326 917 B1**

(12) # EUROPÄISCHE PATENTSCHRIFT

(45) Veröffentlichungstag der Patentschrift: **03.03.93**

(51) Int. Cl.⁵: **C09J 123/00**, C09J 175/04, C08F 283/00

(21) Anmeldenummer: **89101243.7**

(22) Anmeldetag: **25.01.89**

(54) **Strahlenhärtende, thermoaktivierbare Klebstoffmischungen.**

(30) Priorität: **05.02.88 DE 3803477**

(43) Veröffentlichungstag der Anmeldung:
**09.08.89 Patentblatt 89/32**

(45) Bekanntmachung des Hinweises auf die
Patenterteilung:
**03.03.93 Patentblatt 93/09**

(84) Benannte Vertragsstaaten:
**DE FR GB IT**

(56) Entgegenhaltungen:
**GB-A- 1 129 009**
**US-A- 4 269 680**
**US-A- 4 284 731**

(73) Patentinhaber: **BAYER AG**

**W-5090 Leverkusen 1 Bayerwerk(DE)**

(72) Erfinder: **Scholl, Thomas, Dr.**
**Witzfeldstrasse 47a**
**W-4005 Meerbusch 1(DE)**
Erfinder: **Königshofen, Heinrich, Dr.**
**Am Mühlenberg 26**
**W-5060 Bergisch Gladbach 2(DE)**
Erfinder: **Müller-Albrecht, Heinrich, Dr.**
**Roggendorfstrasse 59**
**W-5000 Koeln 80(DE)**
Erfinder: **Dollhausen, Manfred, Dr.**
**Herzogenfeld 21**
**W-5068 Odenthal(DE)**

Rank Xerox (UK) Business Services
(3.10/3.5x/3.0.1)

## Beschreibung

Die Erfindung betrifft Klebstoffmischungen, die sich zur Herstellung strahlengehärteter, thermisch aktivierbarer Klebstoff-Filme eignen.

Die EP-OS 187 044 beschreibt Polystyrolacrylat-Macromonomere und daraus hergestellte strahlenhärtbare Klebstoffmischungen. Die dort verwendeten Macromonomere aus Polystyrolen mit einer Acrylat-Endgruppe betreffen zwar das gleiche Einsatzgebiet, unterscheiden sich aber von den Klebstoffmischungen der vorliegenden Erfindung durch die chemische Struktur und hierdurch bedingt auch in der Affinität zu den verschiedenen zu verklebenden Substraten. Diese unpolaren Klebstoffe haben eine große Haftung zu unpolaren Substraten, während die polaren Klebstoffe der vorliegenden Erfindung vorzugsweise für die Verklebung von polaren Substraten geeignet sind.

Die US-PS 3 994 764 z.B. beschreibt peroxidisch härtende Klebstoffmischungen aus thermoplastischen Polyurethanen und monomeren Acrylaten sowie Acrylsäuren. Der Peroxid-Initiator soll eine Halbwertzeit von mindestens 0,5 h bei 85 °C haben. Nachteilig an diesen Klebstoffsystemen ist die lange Härtezeit von mindestens 1-10 Min. und die zweikomponentige Anwendung. Eine Thermoaktivierbarkeit wurde bei diesen Systemen nicht beobachtet. Die strahlenhärtbaren Klebstoffmischungen der vorliegenden Erfindung lassen sich dagegen in Sekundenbruchteilen härten, sie sind einkomponentig, nach der Strahlenhärtung sofort kalt verklebbar und lassen sich, falls gewünscht, nach der Strahlenhärtung längere Zeit lagern und später thermisch aktivieren und verkleben.

Die DE-AS 1 256 822, 1 930 336, 2 161 340, die DE-OS 3 502 379 und die EP-OS 192 946 beschreiben z.B. thermoplastische, lösliche Polyurethane, die aus Lösungsmitteln wie Methylethylketon, Ethylacetat, DMF oder THF auf das Substrat aufgebracht werden. Diese Klebstoffe sind zwar auch für die Verklebung von "problematischen" Substraten, wie z.B. Weich- PVC, geeignet und führen zu schnellen Anfangsfestigkeiten, doch erfordert die Applikation über die Lösungsform besondere Maßnahmen wie Abluftentsorgung, Heizvorrichtungen etc. Die Verdampfung des Lösungsmittels ist darüber hinaus zeitaufwendig.

Thermisch aktivierbare Klebstoffe stellen bekanntlich trockene, blockfreie Filme dar, die unter der Einwirkung von Hitze und/oder Druck klebrig werden. Nach dem Abkühlen entwickeln sich große Adhäsivkräfte. Sie werden in der Regel aus organischer Lösung oder wäßriger Dispersion auf die Substratoberfläche aufgebracht. Anschließend aktiviert man die zu klebenden Flächen durch Wärme oder Infrarot-Bestrahlung auf ca. 80 °C oder mehr und verklebt. Praktischer Vorteil einer solchen Verklebung sind die kurze Härtezeit und die Möglichkeit der Zwischenlagerung von unverklebten, noch nicht aktivierten Klebefilmen. Nachteilig ist der Auftrag aus organischen Lösungsmitteln oder wäßrigen Dispersionen, da das Abdampfen von Lösungsmittel bzw. Wasser, Zeit, Energie und besondere Vorrichtungen erfordert.

Es wurden nun lösungsmittelfreie, strahlenhärtende, thermisch aktivierbare Klebstoffe gefunden, die gegenüber den bekannten thermisch aktivierbaren Klebstoffen mit Lösungsmitteln eine erheblich größere Applikationsgeschwindigkeit besitzen und sofort nach der Strahlenpolymerisation auch kalt verklebt werden können.

Die erfindungsgemäßen Klebstoffmischungen enthalten

A) 5 - 80 Gew.-% eines kristallisationsfähigen, weitgehend linearen Polyurethans mit einem mittleren Molekulargewicht Mw von 10 000 bis 300 000

B) 20 - 95 Gew.-% photopolymerisierbare, ethylenisch ungesättigte Verbindungen,

C) gegebenenfalls 0,3 - 15 Gew.-% eines Photoinitiators und

D) 0 - 80 Gew.-%, vorzugsweise 0,5 - 50 Gew.-% übliche Klebstoffhilfsmittel (Tenside, Adhäsionsverbesserer, Tackifier etc.).

Die Komponente (A) der erfindungsgemäßen Klebstoffmischung besteht aus mindestens einem Hydroxylgruppen aufweisenden Polyurethan mit einem Molekulargewicht Mw von 10 000 bis 300 000, bevorzugt 100 000 bis 300 000 (gemessen nach GPC), hergestellt aus Diisocyanaten und

a) Hydroxylgruppen aufweisenden Polyestern mit einem Molekulargewicht Mw von 500 bis 10 000 aus Alkandicarbonsäuren und Alkandiolen oder

b) Polyestern mit einem Molekulargewicht Mw von 500 bis 10 000 die durch Polykondensation von Hydroxyalkanmonocarbonsäuren oder durch Polymerisation ihrer Lactone erhalten worden sind oder

c) aus Hydroxylgruppen aufweisenden Polyethern der Formel (I)

$$HO\text{-}(R\text{-}X)_n\text{-}H \quad (I),$$

in der

R $C_1$-$C_{10}$-Alkylen, $C_3$-$C_{10}$-Cycloalkylen oder $C_5$-$C_{14}$-Arylen vorzugsweise Phenylen bedeutet,

X    für Sauerstoff (0) und/oder Schwefel (S) steht und

n    für eine ganze Zahl von 10 bis 100 steht.

Die Zahl n in Formel (I) wird vorzugsweise so gewählt, daß das Molekulargewicht Mw des Polyethers 500 bis 10 000 beträgt.

Beispiele für solche Polyether sind Polyethylenoxid, Polypropylenoxid, Polybutylenoxid, Polyhexamethylenglykol etc.

Besonders bevorzugt sind Polyurethane aus Hydroxylgruppen aufweisenden Polyestern aus Alkandicarbonsäuren mit mindestens sechs Kohlenstoffatomen und Alkandiolen mit mindestens vier Kohlenstoffatomen. Beispiele für geeignete Alkandicarbonsäuren sind Adipinsäure, Pimelinsäure, Korksäure, Azelainsäure, Sebazinsäure usw. Beispiele für geeignete Alkandiole sind Ethylenglykol, Butandiol- 1,4, Pentandiol-1,5, Hexandiol-1,6, usw..

Zur Herstellung der erfindungsgemäß zu verwendenden Hydroxylpolyurethan-Komponente (A) kommen aliphatische, cycloaliphatische, araliphatische und aromatische Diisocyanate beliebiger Art in Betracht, z.B. 1,4-Butandiisocyanat, 1,6-hexandiisocyanat, 1,4-Cyclohexylendiisocyanat, 1-Methyl-2,4-diisocyanatocyclohexan, 1-Methyl-2,6-diisocyanatocyclohexan,2,4- bzw. 2,6-Diisocyanatotoluol sowie deren Gemische, 4,4′-Diphenylmethandiisocyanat.

Die Umsetzung der Diisocyanate mit den Hydroxylpolyestern erfolgt in an sich bekannter Weise durch gemeinsames Erhitzen der Komponenten bei Temperaturen zwischen 70 und 160°C.

Derartige, erfindungsgemäß zu verwendende Hydroxylpolyurethan-Komponenten (A) sind z.B. in der DE-PS 1 256 822, DE-AS 1 930 336, 2 161 340, DE-OS 3 502 379, EP-OS 548 beschrieben.

Die Komponente (B) der erfindungsgemäßen Klebstoffmischung besteht aus mindestens einem strahlenhärtenden, ethylenisch ungesättigten Monomer, das gleichzeitig als Lösungsmittel (Reaktivverdünner) für die Polyurethankomponente (A) dient. Beispiele für geeignete strahlenhärtbare, ethylenisch ungesättigte Monomere sind Methyl-, Ethyl-, Propyl-, Butyl-, tert.-Butyl-, Hexyl-, Cyclohexyl-, Ethylhexyl-, Dodecyl-, Benzyl-, Isobornyl-, Dicyclopentenyl-, Allyl-, Hydroxyethyl-, 2-Hydroxypropyl-, 4-Hydroxybutyl-, 6-Hydroxyhexyl-, 2-Methoxyethyl-, 2-Ethoxyethyl-, 2-(2-Ethoxyethoxy)-ethyl-, Tetrahydrofurfuryl-, 2-Phenoxyethyl-, Glycidylacrylat, N,N-Dimethylacrylamid, Methoxymethylacrylamid, Diethylaminoethylacrylat, Isocyanatoethylacrylat, Carboxyethylacrylat, Ethylenglykoldiacrylat, 1,2-Propylenglykoldiacrylat, 1,4-Butandioldiacrylat, Neopentylglykoldiacrylat, 1,6-Hexandioldiacrylat, 1,10-Decamethylenglykoldiacrylat, Diethylenglykoldiacrylat, Triethylenglykoldiacrylat, Tetraethylenglykoldiacrylat, ethoxyliertes Bisphenol A-diacrylat, Trimethylolpropantrisacrylat, Pentaerythrittetraacrylat, tris-(2-hydroxyethyl)-isocyanurattriaacrylat, Dipentaerythrit-pentaacrylat sowie entsprechende -methyacrylate; Styrol, p-Methylstyrol, α-Methylstyrol, Divinylbenzol, Divinylnaphthalin, Divinylcyclohexan, 1,2,4-Trivinylcyclohexan, Triallyl-cyanuart, Triallylisocyanurat, Vinylpyridin, Vinylpyrrolidon, Divinylpyridin, Divinylimidazol, 3,9-Divinyl-2,4,8,10-tetraoxaspiro-5,5-undecan usw.; Maleinsäure und deren Alkylester, Fumarsäure und deren Alkylester sowie daraus hergestellte ungesättigte Polyester, Acrylatgruppen und Methacrylatgruppen tragende Polyester, Polyurethane oder Epoxidharze usw..

Bevorzugte strahlungshärtbare, ethylenisch ungesättigte Komponenten (B) sind Butyl-, Hexyl-, Ethylhexyl-, Dodecyl-, Dicyclopentadienyl-, Hydroxethyl-, 2-Hydroxypropyl-, 4-Hydroxybutyl-, 2-Methoxyethyl-, 2-Ethoxyethyl-, 2-(2-Ethoxyethoxy)-ethyl-, Tetrahydrofurfurylacrylat, N,N-Dimethylacrylamid, Ethylenglykoldiacrylat, Butandiol-, Hexandiol-, Neopentylglykoldiacrylat, Trimethylolpropantrisacrylat, Pentaerythrittetraacrylat sowie die entsprechenden Methacrylate, Vinylpyrrolidon und Divinylimidazol usw..

Der Gehalt an di-, tri- und höherfunktionellen ungesättigten Monomeren beträgt ca. 3 bis 15 Gew.-% in der Klebstoffmischung. Die Abstimmung des Gehaltes von Monomeren kann wichtig sein, da eine hohe Wärmestandfestigkeit und Chemikalienbeständigkeit einerseits erwünscht ist (höhere Gehalte an Vernetzer), andererseits bei der Strahlenpolymerisation keine spröden, harten Filme entstehen sollen.

Bevorzugt werden Klebstoffmischungen mit Gehalten an di-, tri- oder höherfunktionellen ungesättigten Verbindungen von 3 bis 10 Gew.-%.

Die erfindungsgemäßen Klebstoffmischungen können durch Elektronenstrahlen oder unter Zusatz geeigneter Photoinitiatoren, z.B. durch UV- oder sichtbares Licht gehärtet werden. Typische Härtungsgeschwindigkeiten liegen im Bereich von 5-50 m/min. Geeignete Photonitiatoren für das UV-Licht sind z.B. Benzoin, Benzoinmethylether, Benzoinisopropylether, Benzophenon,Michlers Keton, 2-Hydroxy-2-methylpropionphenon, Benzildimethylketal, Acetophenon, α,α-Dimethoxyacetophenon etc. und für das sichtbare Licht Naphthochinon und Phenathrenchinon etc.

Zur Strahlenhärtung können handelsübliche Elektronenstrahlhärtungsanlagen und UV-Polymeristionsanlagen verwendet werden. (z.B. mit einer UV-Lampenleistung von 80 W/cm).

Die behandelten Filme besitzen unmittelbar nach der Härtung noch eine Oberflächenklebrigkeit, die infolge der Kristallisation der Polyurethan-Komponente (A) nach wenigen Minuten verschwindet. In dieser Zeit kann der strahlengehärtete Film für eine Kaltverklebung genutzt werden. Im anderen Fall kann der kristallisierte, strahlengehärtete Film kleb- und blockfrei längere Zeit gelagert werden und bei Bedarf thermisch aktiviert und verklebt werden.

Die erfindungsgemäßen Klebstoffe können ferner übliche Zusätze wie Tackifier, Antioxidantien, Verdicker etc. enthalten.

Die erfindungsgemäßen Klebstoffe sind im allgemeinen klare bis opake Flüssigkeiten. Sie haben Viskositäten von 200-200 000 cp, bevorzugt 1000-50 000 cp. Sie können mit Hilfe üblicher Auftragstechnologien, Pinsel, Doctor blade, Extruder- oder Vorhanggießer, Spritzpistole o.ä. auf das Substrat gebracht werden.

Beispiel 1

20 g eines linearen Polyesterurethans mit dem Molekulargewicht $M_w$ von 150 000 (gemessen nach GPC) aus 1 Mol eines OH-terminierten Polyesters aus Adipinsäure und Hexandiol mit dem Molekulargewicht 3000 sowie 0,4 Mol Butandiol, 0,4 Mol Hexandiol und 1,8 Mol 4,4'-Diisocyanatodiphenylmethan werden bei 90°C in einem Gemisch aus 35 g Vinylpyrrolidon, 30 g 4-Hydroxybutylacrylat, 10 g Dibutylphthalat sowie 0,25 g 2,6-Di-tert.-butyl-4-methylphenol gelöst. Nach dem Abkühlen auf Raumtemperatur setzt man 3 g Benzildimethylketal (Photoinitiator) hinzu.

Beispiel 2

Lösung, hergestellt gemäß Beispiel 1, aus

```
15     g     eines linearen Polyesterurethans mit Mw =
             175 000, aus einem Adipinsäure/Hexandiol-Poly-
             ester mit Mw = 3000 sowie Butandiol und Hexan-
             diol mit 4,4'-Diisocyanatodiphenylmethan im
             Molverhältnis 1,0:0,4:0,4:1,8

45     g     Vinylpyrrolidon
36     g     4-Hydroxybutylacrylat
0,25   g     2,6-Di-tert.-butyl-4-methylphenol
 2     g     Benzildimethylketal.
```

Beispiel 3

Lösung, hergestellt gemäß Beispiel 1, aus

```
15     g     eines linearen Polyesterurethans mit Mw =
             120 000, aus einem Adipinsäure/Hexandiol-Poly-
             ester mit Mw = 2250 sowie Butandiol und Hexan-
             diol mit 4,4'-Diisocyanatodiphenylmethan im
             Molverhältnis 1,0:0,44:0,45:1,9

 4     g     Dibutylphthalat
45     g     Vinylpyrrolidon
0,25   g     2,6-Di-tert.-butyl-4-methylphenol
 2     g     Benzildimethylketal.
```

4

Beispiel 4

Lösung, hergestellt gemäß Beispiel 1, aus

```
25    g    eines linearen Polyesterurethans mit Mw =
           80 000, aus einem Adipinsäure/Hexandiol-Poly-
           ester mit Mw = 3000 sowie Butandiol und Hexan-
           diol mit 4,4'-Diisocyanatodiphenylmethan im
           Molverhältnis 1,0:0,4:0,4:1,75
 5    g    Dibutylphthalat
35    g    Vinylpyrrolidon
30    g    4-Hydroxybutylacrylat
 0,25 g    2,6-Di-tert.-butyl-4-methylphenol
 2    g    Benzildimethylketal
```

Beispiel 5

Lösung, hergestellt gemäß Beispiel 1, aus

| 30 g | eines linearen Polyesterurethans mit Mw = 150 000, aus einem Adipinsäure/Hexandiol-Polyester mit Mw = 2250 und Toluyldiisocyanat |
|---|---|
| 60 g | Ethyldiglykolacrylat |
| 10 g | Hexandioldiacrylat |
| 0,15 g | 2,6-Di-tert.-butyl-4-methylphenol |
| 3 g | Benzildimethylketal. |

Beispiel 6 (Verklebungen)

Als Substrate werden verwendet:
a) Weich-PVC (45 % Dioctylphthalat)
b) Hart-PVC (30 % Dioctylphthalat), aufgerauht
c) Styrol-Butadien-Kautschuk
d) Thermoplastischer Styrol-Butadien-Styrol-Dreiblock-Kautschuk.
Die Materialien werden in Streifen von 15 cm Länge und 3 cm Breite geschnitten. Anschließend werden die Klebstoffmischungen gemäß Beispiel 1-5 mit dem Pinsel aufgetragen und unter einer Photopolymerisationsapparatur (Fa. Steinemann, Leistung 80 W/cm) mit einer Geschwindigkeit von 10 m/min gehärtet. Die Streifen wurden daraufhin sofort mit 4 bar/10 sec kalt gepreßt oder nach einstündiger Lagerung mit einem IR-Schockaktiviergerät (Fa. Funk, typ A 1000) 4 sec thermisch aktiviert und mit 4 bar/10 sec gepreßt.

Es ergaben sich folgende Trennfestigkeiten:

**Tabelle 1:**

|  | Trennfestigkeiten in kg/cm | | |
|---|---|---|---|
|  | kalt verklebt | thermisch aktiviert (ca. 80° C) | |
|  | 1 d | sofort | 5 d |
| **Klebstoff nach Bsp. 1** | | | |
| 45-er PVC | 1,2 | 1,3 | 5,0 |
| SBR | 13,5 | 1,3 | 8,5 |
| **Klebstoff nach Bsp. 2** | | | |
| 30-er PVC | | 1,2 | 3,8 |
| 45-er PVC | 2,5 | 1,0 | 2,5 |
| SBR | 3,0 | 1,3 | 4,0 |
| SBS | 4,0 | 0,8 | 7,3 |
| **Klebstoff nach Bsp. 3** | | | |
| 30-er PVC | | 1,3 | 6,5 |
| 45-er PVC | 1,5 | 1,1 | 2,5 |
| SBR | 2,3 | 1,8 | |
| SBS | 3,2 | 1,3 | 3,3 |
| **Klebstoff nach Bsp. 4** | | | |
| 45-er PVC | 3,7 | 0,7 | 2,7 |
| SBR | 7,3 | 1,8 | 2,7 |

**Patentansprüche**

1. Strahlenhärtbare, thermisch aktivierbare Klebstoffmischung, bestehend aus

A) 5 - 80 Gew.-% eines thermoplastischen, weitgehend linearen, endständige Hydroxylgruppen aufweisendes Polyurethan, hergestellt durch Umsetzung von Polyesterdiolen oder Polyetherdiolen eines Molekulargewichts von 500 bis 10.000 und gegebenenfalls Diolen des Molekulargewichts 62 bis 500 als Kettenverlängerungsmittel mit organischen Diisocyanaten,

B) 20 - 95 Gew.-% strahlenhärtbaren, ethylenisch ungesättigten Verbindungen, gegebenenfalls

C) 0-15 Gew.-% Photoinitiator und gegebenenfalls

D) 0-50 Gew.-% eines nichtreaktiven Additivs (Klebrigmacherharz, Fließhilfsmittel, Elastomer und/oder Tensid).

2. Strahlenhärtbare, thermisch aktivierbare Klebstoffmischung gemäß Anspruch 1, wobei die Komponente B eine Mischung aus mindestens einer monoethylenisch ungesättigten Verbindung und mindestens einer polyethylenisch ungesättigten Verbindung darstellt.

3. Strahlenhärtbare, thermisch aktivierbare Klebstoffmischung gemäß Anspruch 1, wobei die Komponenten A ein thermoplastisches, lösliches Polyurethan mit einem mittleren Molekulargewicht Mw von 50 000 bis 250 000 darstellt.

4. Klebstoffmischung gemäß Anspruch 1, dadurch gekennzeichnet, daß die Komponente A aus weitgehend linearen, endständigen Hydroxylgruppen aufweisenden Polyurethanen, hergestellt durch Umsetzung von Polyesterdiolen mit Molekulargewichte Mw von 500 bis 10 000 und gegebenenfalls Diolen mit Molekulargewichten Mw von 62 bis 600 als Kettenverlängerungsmittel mit organischen Diisocyanaten, besteht.

5. UV-härtbare, thermisch aktivierbare Klebstoffmischung gemäß Anspruch 1, bestehend aus
A) 10-50 Gew.-% eines thermoplastischen, weitgehend linearen, endständige Hydroxylgruppen aufweisenden Polyurethans, hergestellt durch Umsetzung von Polyesterdiolen eines Molekulargewichts Mw von 600 bis 10 000 und gegebenenfalls Diolen des Molekulargewichts Mw von 62 bis 600 als Kettenverlängerungsmittel mit organischen Diisocyanaten,
B) 50-90 Gew.-% einer Verbindung der Reihe Hydroxyethyl-, Hydroxypropyl-, Hydroxybutyl-, Ethylhexyl-, Ethyldiglykolacrylat, Butandioldiacrylat, Hexandioldiacrylat, Trimethylolpropantriacrylat sowie entsprechende Methacrylate, Maleinsäure/Fumarsäure und deren Alkylester, Vinylpyrrolidon,
C) 0,5-10 Gew.-% eines UV-Initiators und
D 0-50 Gew.-% eines nichtreaktiven Additivs (Tackifier, Fließhilfsmittel, Elastomer und/oder Tensid).

6. Verfahren zur Verklebung von organischen und anorganischen Materialien, dadurch gekennzeichnet, daß nach dem Auftragen der Klebstoffmischungen gemäß Anspruch 1 eine Strahlenhärtung durchgeführt wird und die Substrate daraufhin innerhalb von 30 Min. kalt verklebt oder später thermisch aktiviert und verklebt werden.

**Claims**

1. A radiation-curing, heat-activatable adhesive mixture consisting of
A) 5 to 80% by weight of a thermoplastic, substantially linear, hydroxyl-terminated polyurethane prepared by reaction of polyester diols or polyether diols and having a molecular weight Mw of 5,000 to 10,000 and optionally diols having a molecular weight of 62 to 500 as chain-extending agents with organic diisocyanates,
B) 20 to 95% by weight radiation-curing, ethylenically unsaturated compounds, optionally
C) 0 to 15% by weight photoinitiator and, optionally,
D) 0 to 80% by weight of a non-reactive additive (tackifying resin, flow aid, elastomer and/or surfactant).

2. A radiation-curing, heat-activatable adhesive mixture as claimed in claim 1 in which component B is a mixture of at least one monoethylenically unsaturated compound and at least one polyethylenically unsaturated compound.

3. A radiation-curing, heat-activable adhesive mixture as claimed in claim 1 in which component A is a thermoplastic, soluble polyurethane having an average molecular weight Mw of from 50,000 to 250,000.

4. An adhesive mixture as claimed in claim 1, characterized in that component A consists of substantially linear hydroxyl-terminated polyurethanes prepared by reaction of polyester diols having molecular weights Mw of from 500 to 10,000 and, optionally, diols having molecular weights Mw of from 62 to 600 as chain-extending agents with organic diisocyanates.

5. A UV-curing, heat-activatable adhesive mixture as claimed in claim 1 consisting of
A) 10 to 50% by weight of a thermoplastic, substantially linear, hydroxyl-terminated polyurethane prepared by reaction of polyester diols having a molecular weight Mw of from 600 to 10,000 and, optionally, diols having a molecular weight Mw of from 62 to 600 as chain-extending agents with organic diisocyanates,
B) 50 to 90% by weight of a compound from the group consisting of hydroxyethyl, hydroxypropyl, hydroxybutyl, ethyl hexyl, ethyl diglycol acrylate, butanediol diacrylate, hexanediol diacrylate, trimethylolpropane triacrylate and also corresponding methacrylates, maleic acid/fumaric acid and alkyl esters thereof, vinyl pyrrolidone,
C) 0.5 to 10% by weight of a UV initiator and
D) 0 to 50% by weight of a non-reactive additive (tackifier, flow aid, elastomer and/or surfactant).

6. A process for the bonding of organic and inorganic materials, characterized in that, after application, the adhesive mixtures claimed in claim 1 are radiation-cured and the substrates are then cold-bonded for 30 minutes or are subsequently heat-activated and bonded.

**Revendications**

1. Mélange adhésif thermo-activable, durcissable par irradiation, constitué de :
A) 5 à 80 % en poids d'un polyuréthanne thermoplastique largement linéaire portant des groupes hydroxyle terminaux, préparé par réaction de polyesterdiols ou de polyétherdiols d'un poids moléculaire de 500 à 10 000 et, le cas échéant, de diols d'un poids moléculaire de 62 à 500 comme agents d'allongement de chaîne avec des diisocyanates organiques,
B) 20 à 95 % en poids de composés à non-saturation éthylénique, durcissables par irradiation, le cas échéant
C) 0 à 15 % en poids de photo-initiateur et, le cas échéant
D) 0 à 50 % en poids d'un additif non réactif (résine d'adhésivité, substance auxiliaire d'écoulement, élastomère et/ou agent tensio-actif).

2. Mélange adhésif thermo-activable, durcissable par irradiation suivant la revendication 1, dans lequel le composant B constitue un mélange d'au moins un composé à non-saturation mono-éthylénique et d'au moins un composé à non-saturation polyéthylénique.

3. Mélange adhésif thermo-activable, durcissable par irradiation suivant la revendication 1, dans lequel le composant A constitue un polyuréthanne thermoplastique soluble ayant un poids moléculaire moyen $M_p$ de 50 000 à 250 000.

4. Mélange adhésif suivant la revendication 1, caractérisé en ce que le composant A est constitué de polyuréthannes principalement linéaires, portant des groupes hydroxyle terminaux, obtenus par réaction de polyesterdiols ayant des poids moléculaires $M_p$ de 500 à 10 000 et, le cas échéant, de diols ayant des poids moléculaires $M_p$ de 62 à 600 comme agents d'allongement de chaîne avec des diisocyanates organiques.

5. Mélange adhésif thermo-activable, durcissable par les rayons ultraviolets, suivant la revendication 1, constitué de
A) 10 à 50 % en poids d'un polyuréthanne thermoplastique principalement linéaire, portant des groupes hydroxyle terminaux, obtenu par réaction de polyesterdiols de poids moléculaire $M_p$ de 600 à 10 000 et, le cas échéant, de diols de poids moléculaire $M_p$ de 62 à 600 comme agents d'allongement de chaîne avec des diisocyanates organiques,
B) 50 à 90 % en poids d'un composé de la série acrylate d'hydroxyéthyle, hydroxypropyle, hydroxybutyle, éthylhexyle, éthyldiglycol, diacrylate de butanediol, diacrylate d'hexanediol, triacrylate de triméthylolpropane ainsi que des méthacrylates correspondants, acide maléique/acide fumarique et leurs esters alkyliques, vinylpyrrolidone,
C) 0,5 à 10 % en poids d'un initiateur UV et
D) 0 à 50 % en poids d'un additif non réactif (agent d'adhésivité, auxiliaire d'écoulement, élastomère et/ou agent tensio-actif).

6. Procédé d'assemblage par collage de matières organiques et inorganiques, caractérisé en ce qu'après l'application des mélanges adhésifs suivant la revendication 1, on effectue un durcissement par irradiation, puis on assemble les substrats en 30 minutes par collage à froid ou bien on procède plus tard à leur activation thermique et à leur assemblage par collage.